# EUROPÄISCHE PATENTSCHRIFT

(11) **EP 2 193 649 B1**
(45) Veröffentlichungstag und Bekanntmachung des Hinweises auf die Patenterteilung: **21.11.2012**
(21) Anmeldenummer: 07818564.2
(22) Anmeldetag: 28.09.2007
(51) Int. Cl.: H04L 29/12, H04L 29/06, H04L 29/08

(54) **Verfahren und Vorrichtung zur Verbindung paketorientierter Kommunikationsendgeräte**
Method and device for connecting packet-oriented communication terminals
Procédé et dispositif pour connecter des terminaux de communication en mode paquet

(43) Veröffentlichungstag der Anmeldung: 09.06.2010
(73) Patentinhaber: Siemens Enterprise Communications GmbH & Co. KG, 81379 München (DE)
(72) Erfinder: VEITS, Oliver, 85221 Dachau (DE)
(74) Vertreter: Fritzsche, Thomas
(86) Internationale Anmeldenummer: PCT/EP2007/008484
(87) Internationale Veröffentlichungsnummer: WO 2009/046729

(56) Entgegenhaltungen:
- SIPPING WG J ROSENBERG DYNAMICSOFT R MAHY CISCO S SEN NORTEL: "NAT and Firewall Scenarios and Solutions for SIP; draft-ietf-sipping-nat-scenarios-00.txt" IETF STANDARD-WORKING-DRAFT, INTERNET ENGINEERING TASK FORCE, IETF, CH, Bd. sipping, 24. Juni 2002 (2002-06-24), Seiten 1-69, XP015003441 ISSN: 0000-0004

## Beschreibung

Die Erfindung betrifft ein Verfahren und Vorrichtung zur Verbindung paketorientierter Kommunikationsendgeräte, welche über eine netzwerkadressumsetzende Einheit getrennt sind und bei dem ein Gateway eine Vermittlung eines lokalen Kommunikationsendgeräts steuert.

Es ist bekannt, paketorientierte Netzwerke von anderen paketorientierten Netzwerken dahingehend zu trennen, dass zwischen den jeweiligen Netzwerken ein sogenanntes »NAT Device« bzw. NAT-Einheit (Network Address Translation) angeordnet ist. Eine solche NAT-Einheit findet sich häufig an der Grenze zwischen einem lokalen Netzwerk bzw. LAN (Local Area Network) und einem üblicherweise als »Internet« bezeichneten Verbundes öffentlicher Netzwerke.

Die NAT-Einheit ermöglicht eine Verwendung eines Satzes von IP-Adressen (Internet Protocol) für einen LAN-internen Datenpaketaustausch und eines weiteren Satzes von IP-Adressen für einen externen Datenpaketaustausch. Im Falle eines internen Datenpaketaustausches wird dabei auch von privaten IP-Adressen gesprochen, während im Fall eines externen Datenpaketaustausch auch von externen IP-Adresse gesprochen wird.

Das Grundprinzip von NAT sieht eine Zuordnung (Mapping) einer jeweiligen privaten IP-Adresse zu einer jeweiligen öffentlichen IP-Adresse vor. Diese Zuordnung wird auch »Bindung« (Binding) genannt und ist üblicherweise insbesondere zeitlich begrenzt.

Eine erweiterte Ausführungsform der genannten NAT-Einheit ist unter dem Stichwort NAPT (Network Address & Port Translation) bekannt. Hier ist zusätzlich eine Abbildung von externen Portnummern zu internen Portnummern vorgesehen. NAT und NAPT sind in der Druckschrift RFC 3022 der IETF (Internet Engineering Task Force) beschrieben.

In der einfachsten Ausführung von NAT ist für ein vom LAN ausgehenden Datenpaket eine Änderung der Quell-Adresse vorgesehen. Dieser Vorgang wird als »Source NAT« bezeichnet.

In einem eingehenden Datenpaket, d.h. von einem öffentlichen Netzwerk ausgehend in Richtung des LAN eintreffenden Datenpakets kann eine Modifizierung der Ziel-Adresse vorgesehen sein. Dieser Vorgang wird auch als »Destination NAT« bezeichnet. Für eine korrekte Zuordnung des eintreffenden Datenpakets durch das Destination-NAT-Verfahrens ist eine übliche Voraussetzung, dass in der NAT-Einheit eine Zuordnungstabelle vorgesehen ist, in welcher eine Zuordnung bzw. Bindung zwischen der im Datenpaket im Header vermerkten öffentlichen und einer zuzuordnenden privaten Adresse vermerkt ist. Eine solche Bindung setzt voraus, dass dem eingehenden Datenpaket ein ausgehendes Datenpaket vorausgegangen ist, anhand dessen Quell- und Zieladressen eine Bindung erstellt wurde. Mit Ausnahme einer sogenannten »Full Cone NAT« ist es daher üblicherweise nicht möglich, einen von außerhalb des LAN initiierten Datenpaketaustausch zu veranlassen.

Dies ist insbesondere für Kommunikationsprotokolle hinderlich, bei denen ein rufender Teilnehmer einen gerufenen Teilnehmer im LAN zu erreichen versucht. Bei Verwendung von Kommunikationsprotokollen, wie z.B. SIP (Session Initiation Protocol) oder H.323 treten daher mit NAT-Einheiten regelmäßig Probleme auf.

Ein weiteres Problem entsteht aufgrund der Tatsache, dass die Veränderung des Datenpakets durch die NAT-Einheit zwar eine Änderung der Adressen in Datenkopfeinträgen bzw. »Header« der Datenpakete vorsieht, jedoch Informationen in höheren Schichten, also insbesondere SIP, unberücksichtigt lässt.

Aus dem Stand der Technik sind mehrere Verfahren bekannt, welche diese Probleme teilweise zu lösen vermögen. Hierbei sind insbesondere die Protokolle STUN (Simple Traversal of UDP through NAT), UPnP (Universal Plug and Play), TURN (Traversal Using Relay NAT), ICE (Interactive Connectivity Establishment) zu nennen, welche eine richtige Zustellung von Datenpaketen teilweise gewährleisten. "Nat and firewall scenarios and solutions for SIP" von J. Rosenberg (draft-ietf-sipping-nat-scenarios-00.txt) beschreibt weitere Szenarien.

Die genannten Verfahren bedingen meist eine Implementierung eines entsprechenden Protokollstacks in den beteiligten Kommunikationsendgeräten. Bei den Kommunikationsendgeräten handelt es sich um - je nach Ausführung mit unterschiedlicher Rechenleistung ausgestattete - paketorientiert kommunizierende Telefone oder auch um Rechner mit entsprechender Audio-und/oder Videokommunikationsmöglichkeit. Derartige Kommunikationsendgeräte sind in der Fachwelt auch als VoIP-Kommunikationsendgeräte (Voice over Internet Protocol) geläufig.

Aufgabe der Erfindung ist es, eine verbesserte Kommunikationsverbindung über Netzwerkgrenzen zu gewährleisten, welche keine Implementierung eines entsprechenden Protokollstacks in den Kommunikationsendgeräten erfordert und welche einen vorhandenen Proxy entlastet.

Die Aufgabe wird durch ein Verfahren mit den Merkmalen des Patentanspruchs 1 gelöst. Die Erfindung wird in gleicher Weise durch eine Anordnung (Proxy) mit den Merkmalen des Patentanspruchs 6 gelöst.

Die Erfindung kommt in einem Umfeld zum Einsatz, bei dem ein erstes Kommunikationsendgerät in einem ersten Netzwerk, beispielsweise ein lokales Netzwerk oder auch LAN, angeordnet ist. Dieses erste Netzwerk ist über eine netzwerkadressumsetzende Einheit bzw. NAT-Einheit an ein zweites Netzwerk, beispielsweise ein »öffentliches« Netzwerk angebunden. In diesem zweiten Netzwerk ist ein zweites Kommunikationsendgerät vorgesehen, welches als Kommunikationspartner mit dem ersten Kommunikationsendgerät vorgesehen ist. Das zweite Kommunikationsendgerät ist entweder der Initiator oder das Ziel einer aufzubauenden Kommunikationsverbindung, nimmt also entweder eine rufende oder eine gerufene Rolle ein.

Im ersten Netzwerk ist weiterhin ein Gateway vorgesehen, dessen Aufgabe in einer Verwaltung, Anmeldung und Vermittlung des ersten Kommunikationsendgeräts besteht. In einer allgemeinen Form steuert das Gateway eine Vermittlung des ersten Kommunikationsendgeräts.

Erfindungsgemäß ist in diesem Gateway ein Proxy vorgesehen, welcher für eine »Interception«, also für ein Abfangen von für das erste Kommunikationsendgerät bestimmte und/oder seitens des ersten Kommunikationsendgeräts ausgehenden Nachrichten eingerichtet ist. Bei den mit Hilfe der Nachricht ausgetauschten Daten handelt sich dabei insbesondere um Signalisierungsdaten oder um Nutzdaten.

Erfindungsgemäß ist seitens des Proxys ein Netzwerkprotokoll zur Erkennung der netzwerkadressumsetzenden Einheit - also der NAT-Einheit - in Zusammenarbeit mit einen Server implementiert. Als Netzwerkprotokoll zur Erkennung und Durchdringung der netzwerkadressumsetzenden Einheit wird dabei beispielsweise STUN, TURN, ICE, oder eine Kombination der drei genannten Protokolle verwendet. Der Server arbeitet dementsprechend als STUN-Server, TURN-Server oder ICE-Server. Erfindungsgemäß beanworket der Proxy eine seitens des Servers an das erste Kommunikationsendgerät gesendete erste Nachrichten an Stelle des ersten Kommunikationsendgeräts durch eine zweite Nachricht. Die zweite Nachricht ist dabei je nach Status der Kommunikation fallweise so beschaffen, dass als Absenderadresse und/oder Absender-Portnummer eine Adresse und/oder Portnummer des ersten Kommunikationsendgeräts eingetragen wird. Diese Vorgabe einer nicht der eigenen Absenderadresse bzw. -portnummer entsprechenden Absenderadresse bzw. -portnummer wird in der Fachwelt auch als »Spoofing« bezeichnet.

Alternativ oder zusätzlich ist in der zweiten Nachricht eine gemäß dem Netzwerkprotokoll zur Erkennung und Durchdringung der netzwerkadressumsetzenden Einheit (NAT) vorgesehene Option eingestellt, welche eine Übermittlung der Antwort auf die zweite Nachricht an das erste Kommunikationsendgerät (P1) veranlasst. Es handelt sich dabei um die Option »RESPONSE-ADDRESS«, bei deren Einstellung eine alternative Übermittlungsadresse in einem entsprechenden »RESPONSE-ADDRESS«-Feld einzutragen ist.

Die Erfindung ist von der Idee getragen, fallweise ein IP-Adressen-Spoofing bzw. ein Portnummern-Spoofing und ein STUN-Feld »RESPONSE-ADDRESS« auf einer zentralen Instanz zu kombinieren (STUN- bzw. ICE-Proxy im Gateway) und damit das STUN- bzw. ICE-Protokoll nicht auf den jeweiligen Kommunikationsendgeräten, sondern auf einer anderen Einheit ausgelagert auszuführen. Eine Ausführung erfolgt selbst dann, wenn sich die zentrale Einheit nicht im Nutzdatenpfad zwischen dem STUN-Server STUN und dem jeweiligen Kommunikationsendgerät befindet.

Vorteilhafte Weiterbildungen der Erfindung sind in den Unteransprüchen angegeben.

Ein Ausführungsbeispiel mit weiteren Vorteilen und Ausgestaltungen der Erfindung wird im Folgenden anhand der Zeichnung näher erläutert.

Dabei zeigen:
- Fig. 1:: ein Strukturbild zur schematischen Darstellung einer Kommunikationsumgebung gemäß einer ersten Netzwerktopologie; und
- Fig. 2:: ein Strukturbild zur schematischen Darstellung einer Kommunikationsumgebung gemäß einer zweiten Netzwerktopologie.

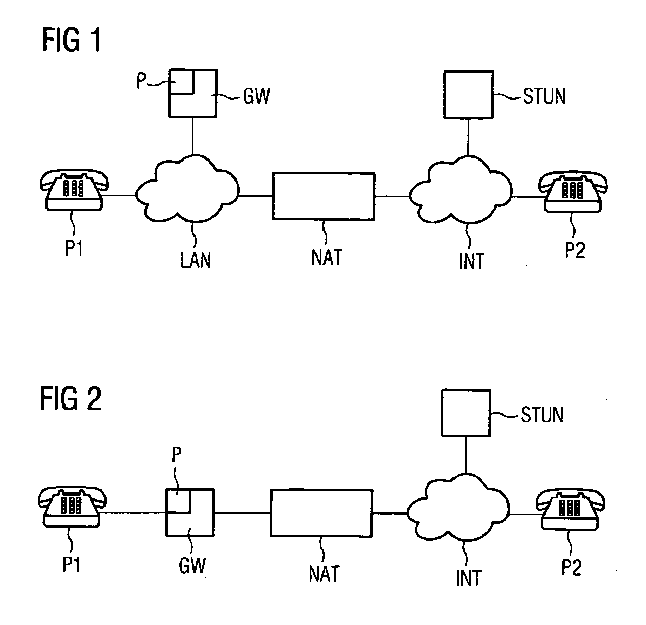

Im Folgenden werden zunächst zwei Netzwerktopologien anhand der Figuren 1 und 2 dargestellt, welche in den jeweiligen unten erläuterten Ausführungsformen der Erfindung ein jeweiliges Mittel der Wahl sind.

Figur 1 zeigt ein erstes paketorientiertes Netzwerk LAN, an das ein erstes Kommunikationsendgerät P1, ein Gateway GW sowie eine NAT-Einheit NAT angeschlossen sind. Die NAT-Einheit NAT ist über eine weitere Schnittstelle mit einem zweiten paketorientiertem Netzwerk INT verbunden. An das zweite paketorientierte Netzwerk INT sind des Weiteren ein STUN-Server STUN und ein zweites Kommunikationsendgerät P2 angeschlossen. Dem Gateway GW ist ein Proxy P zugeordnet, welcher in der hier angenommenen Topologie in das Gateway GW integriert ist. Es liegt im Belieben des Fachmanns, eine separate - dezentrale oder verteilte - Anordnung des Proxys P zum Gateway GW zu wählen.

Figur 2 zeigt das erste Kommunikationsendgerät P1, das an das Gateway GW angeschlossen ist, welches wiederum mit der NAT-Einheit NAT verbunden ist. Die NAT-Einheit NAT ist über eine weitere Schnittstelle mit dem zweiten paketorientiertem Netzwerk INT verbunden. An das zweite paketorientierte Netzwerk INT sind des Weiteren der STUN-Server STUN und das zweite Kommunikationsendgerät P2 angeschlossen. Dem Gateway GW ist ein Proxy P zugeordnet, welcher in der hier angenommenen Topologie in das Gateway GW integriert ist. Es liegt auch hier im Belieben des Fachmanns, eine separate - dezentrale oder verteilte - Anordnung des Proxys P zum Gateway GW zu wählen.

In allen Ausführungsformen sei das erste Kommunikationsendgerät P1 ein exemplarischer »Local Client«, mithin ein weitgehend beliebiges Kommunikationsendgerät, welches sich im Wirkungsbereich und/oder in netzwerktopologischer Nähe zum Gateway GW befindet. Das exemplarische erste Kommunikationsendgerät P1 ist dabei ein weitgehend beliebiges rufendes Kommunikationsendgerät. Das zweite Kommunikationsendgerät P2 ist dagegen als Beispiel eines »Remote Client«, mithin als weitgehend beliebiges gerufenes Kommunikationsendgerät außerhalb des Wirkungskreises und/oder der netzwerktopologischer Nähe des Gateways GW.

Während in der Topologie gemäß Figur 1 das Gateway GW zwar indirekt, d.h. bezüglich vom ersten Kommunikationsendgerät P1 ausgetauschter Signalisierungsnachrichten im Datenpfad zwischen dem ersten Kommunikationsendgerät P1 und der NAT-Einheit NAT angeordnet ist, ist in der Topologie gemäß Figur 2 das Gateway GW direkt im Datenpfad zwischen dem ersten Kommunikationsendgerät P1 und der NAT-Einheit NAT angeordnet. Eine direkte Anordnung bedeutet dabei, dass das Gateway GW sowohl im Datenpfad der Nutzdaten als auch der Signalisierungsdaten zwischen dem ersten Kommunikationsendgerät P1 und dessen Kommunikationspartner, mithin dem zweiten Kommunikationsendgerät P2 angeordnet ist.

Das erste Kommunikationsendgerät P1 ist am Gateway GW registriert. Bei dem Gateway GW handelt es sich beispielsweise um einen VoIP-Gateway (Voice over IP) und bei dem ersten Netzwerk LAN handelt es sich beispielsweise um ein privates Netzwerk, üblicherweise auch LAN (Local Address Network) genannt. Die NAT-Einheit NAT ist zwischen dem privatem ersten Netzwerk LAN und dem beispielsweise öffentlichen zweiten Netzwerk INT lokalisiert. Aufgabe dieser NAT-Einheit NAT ist eine Ersetzung der privaten IP-Adresse durch eine öffentliche IP-Adresse.

Falls die NAT-Einheit zusätzlich für eine Ersetzung des privaten Ports bzw. Portnummer mit einem öffentlichen Port eingerichtet ist, wird auch von einer NAT/PAT-Einheit gesprochen (Network Address Translation/Port Address Translation).

Da das zweite Kommunikationsendgerät P2 das erste Kommunikationsendgerät P1 nicht mit dessen privater Adresse ansprechen kann, müssen die privaten IP-Adressen und -Portnummern, welche in Signalisierungsnachrichten ausgetauscht werden, in eine öffentliche IP-Adresse bzw. Portnummer übersetzt werden.

Im Stand der Technik wird eine solche Übersetzung üblicherweise von der NAT-Einheit oder vom ersten Kommunikationsendgerät P1 vorgenommen. Dabei sind NAT-Einheiten bekannt, welche auch als Application Layer Gateway (ALG) bezeichnet werden. Derartige ALG sind in der Lage, die in den Signalisierungsnachrichten enthaltenen Adressen zu extrahieren und zu übersetzen und modifizierte Signalisierungsnachrichten zu erstellen. Je nach verwendetem Protokoll werden diese als SIP-ALG oder H.323-ALG bezeichnet.

Für Fälle, in denen die im Datenpart zwischengeschaltete NAT-Einheit NAT nicht als ALG ausgestaltet ist, muss das erste Kommunikationsendgerät P1 entsprechende Ersetzungen in entsprechenden Signalisierungsnachrichten vornehmen. Zu diesem Zweck muss das erste Kommunikationsendgerät P1 im Wissen seiner öffentlichen Internetadresse und Portnummer sein. Um diese zu erhalten, wird der STUN-Server STUN durch das erste Kommunikationsendgerät P1 befragt.

Im Falle des erweiterten Protokolls Interactive Connectivity Establishment (ICE) wird der STUN-Mechanismus dahingehend erweitert, dass auch symmetrische NAT-Situationen behandelt werden können. Solche symmetrischen NAT-Situationen treten z.B. in Fällen auf, bei denen die NAT/PAT-Übersetzung der Quell-Internetadresse und der Quell-Portnummer von der Ziel-Internetadresse bzw. der Ziel-Portnummer abhängt.

Um dies zu erreichen, hält das erste Kommunikationsendgerät P1 alle verfügbaren Internetadressen vor, unter denen es eventuell zu erreichen wäre, also z.B. private Internetadressen sowie Adressen, welche durch einen STUN- oder einen TURN-Server bereitgestellt werden. Die vorgesagten Adressen werden alle in eine entsprechende Signalisierungsnachricht eingebunden. Auf eine derartige Sammlung von IP-Adressen bzw. Portnummern wird im Weiteren auch als »Kandidatenliste« (Candidate List) Bezug genommen.

Das gerufene Kommunikationsendgerät entnimmt dann alle vorgehaltenen Adressen aus der Signalisierungsnachricht und testet diese nacheinander. Hierzu werden STUN-Anfragen an alle Adressen gesendet und das gegenseitige Kommunikationsendgerät wird jede dieser STUN-Anfragen beantworten. Dies bedeutet, dass zur Unterstützung des ICE-Verfahrens alle Kommunikationsendgeräte P1, P2 eine STUN-Client-Applikation als auch eine STUN-Server-Applikation implementiert haben müssen.

Die vorgenannt beschriebenen Verfahrensweisen stellen den derzeitigen Stand der Technik dar, durch die eine Erreichbarkeit von Kommunikationsendgeräten P1, P2 über eine NAT-Einheit NAT erreicht werden soll.

Die erfinderischen Mittel werden im Folgenden anhand mehrerer Ausführungsbeispiele beschrieben. Eine gemeinsame Idee der Ausführungsformen besteht darin, fallweise ein »IP Address Spoofing« und ein STUN-Feld »RESPONSE-ADDRESS« auf einer zentralen Instanz (STUN- bzw. ICE-Proxy P im Gateway GW) anzuwenden und damit das STUN- bzw. ICE-Protokoll nicht auf den jeweiligen.Kommunikationsendgeräten P1, P2, sondern auf einer anderen Einheit ausgelagert auszuführen. Eine Ausführung erfolgt selbst dann, wenn sich die zentrale Einheit nicht im Nutzdatenpfad zwischen dem STUN-Server STUN und dem jeweiligen Kommunikationsendgerät P1, P2 befindet.

Im Folgenden wird eine erste Ausführungsform der Erfindung unter Bezugnahme auf die Figur 2 beschrieben. In dieser ersten Ausführungsform wie auch in allen folgenden Ausführungsformen wird angenommen, dass die NAT-Einheit NAT nicht als ALG ausgestaltet ist und dass die beteiligten Kommunikationsendgeräte P1, P2 nicht in der Lage sind, STUN-Anfragen zu bearbeiten.

Gemäß der ersten Ausführungsform ist das Gateway GW direkt im Datenpfad zwischen dem ersten Kommunikationsendgerät P1 und der NAT-Einheit NAT angeordnet. Das Gateway GW ist des Weiteren als STUN-Proxy P ausgestaltet. Das Gateway GW befindet sich also durch die Anordnung im Datenpfad zwischen dem ersten Kommunikationsendgerät P1 und der NAT-Einheit NAT sowohl im Nutzdatenpfad als auch im Signalisierungsdatenpfad zwischen dem ersten Kommunikationsendgerät und seinem Kommunikationspartner, hier, dem zweiten Kommunikationsendgerät P2.

Das mit dem STUN-Proxy P ausgestaltete Gateway GW und das Gateway GW bezeichnen in der folgenden Beschreibung oftmals eine identische Funktionseinheit, nämlich ein um eine »Proxyfunktionalität erweitertes Gateway«. Dementsprechend ist bei der Beschreibung der erfindungsgemäßen Mittel das STUN-Proxy P einerseits und das Gateway GW andererseits als funktionsidentisch anzunehmen. Die jeweilig gewählte Bezeichnung betont einerseits den Protokollbearbeitungscharakter des STUN-Proxys P und andererseits den Charakter des Gateways GW als eine adressierbare Einheit. Dies gilt auch für die dem ersten Ausführungsbeispiel folgenden weiteren Ausführungsbeispiele mit einem entsprechenden TURN- oder ICE-Proxy P.

Die mit der zusätzlichen Funktionalität ausgestaltete Funktion des Gateway GW besteht darin, dass das Gateway GW im STUN-Proxy P eine STUN-Protokollbearbeitung anstelle des ersten Kommunikationsendgeräts P1 durchführt. Im Folgenden wird diese STUN-Protokollbearbeitung anhand einzelner Schritte näher dargestellt.
- 1.1: Das Gateway GW fängt eine vom ersten Kommunikationsendgerät P1 gesendete Signalisierungsnachricht ab (Interception) und speichert deren Inhalte. Bei einer solchen Signalisierungsnachricht handelt es sich beispielsweise um eine üblicherweise ausgestaltete H.323-oder SIP-Meldung. Die Signalisierungsnachricht enthält Informationen über die private IP-Adresse (Internet Protocol) und einen zugehörigen TCP/UDP-Port (Transmission Control Protocol/User Datagram Protocol), welche das erste Kommunikationsendgerät P1 für einen Austausch von Kommunikationsinformationen zu nutzen beabsichtigt.
- 1.2: Das Gateway GW sendet nun STUN-Anfragen an den STUN-Server STUN wobei das Gateway GW nicht seine eigene Adresse und seine eigene Portnummer verwendet, sondern die aus 1.1 bezogene Adresse bzw. Portnummer. Mit anderen Worten gibt das Gateway GW eine andere Adresse und Portnummer als seine eigene an und führt somit ein »IP-Address-Spoofing« sowie ein »Port-Spoofing« durch.
- 1.3: Das Gateway GW fängt eine vom STUN-Server STUN in Antwort auf eine der STUN-Anfragen gesendete STUN-Nachricht ab, welche an die private IP-Adresse und die private Portnummer des ersten Kommunikationsendgeräts P1 gerichtet ist.
- 1.4: Die öffentliche IP-Adresse und die öffentliche Portnummer werden aus der STUN-Antwort entnommen.
- 1.5: Die private IP-Adresse und die private Portnummer werden durch die zugehörige öffentliche IP-Adresse und die zugehörige öffentliche Portnummer des ersten Kommunikationsendgeräts ersetzt. Die letztgenannten öffentlichen Einträge stammen dabei aus der gemäß Schritten 1.3 und 1.4 entnommenen STUN-Antwort.
- 1.6: Eine entsprechend abgeänderte Signalisierungsnachricht wird nun an das Ziel gesendet, welches im Schicht-3-Header der Signalisierungsnachricht identifiziert wurde.

Der Kommunikationspartner des ersten Kommunikationsendgerätes P1, also das zweite Kommunikationsendgerät P2, kann nun die übersetzte öffentliche IP-Adresse sowie Portnummer aus der Signalisierungsnachricht entnehmen und kann nun eine direkte Medienverbindung mit dem ersten Kommunikationsendgerät P1 aufbauen, welche mit einem Austausch von Nutzdaten einhergeht.

Im Folgenden wird eine zweite Ausführungsform der Erfindung unter Bezugnahme auf die Figur 1 erläutert.

In einem allgemeinen Szenario wird nun angenommen, dass der im Gateway GW implementierte STUN-Proxy P zwar im Datenpfad bezüglich Signalisierungsnachrichten aber nicht im Datenpfad bezüglich Nutzdatennachrichten - sogenannter Media-Path - angeordnet bzw. zwischengeschaltet ist. In einem solchen Fall wäre der Verfahrensschritt 1.3 gemäß der ersten Ausführungsform ohne weitere Änderungen im Vorgehen nicht durchführbar, da das Gateway GW mit dem darin implementierten STUN-Proxy P nicht im Datenpfad für Nutzdatennachrichten angeordnet ist und damit nicht in der Lage wäre, eine STUN-Response, welche vom STUN-Server STUN zum ersten Kommunikationsendgerät P1 gesendet wird, abzufangen (intercept).

Als Teil zur Lösung wird erfindungsgemäß eine Option »RESPONSE-ADDRESS« verwendet, welche in der das STUN-Verfahren beschreibenden Druckschrift RFC 3489 definiert ist. Diese Option wird bei der Bildung der STUN-Anforderung - vergleiche auch Verfahrensschritt 1.2 im ersten Ausführungsbeispiel - verwendet. Im Folgenden werden die einzelnen Verfahrensschritte, welche unter Beteiligung des STUN-Proxys P im Gateway GW durchgeführt werden, detailliert beschrieben.
- 2.0: Das Gateway GW sendet eine STUN-Anforderung an den STUN-Server STUN unter Verwendung der eigenen IP-Adresse und der eigenen Portnummer. Dieser Schritt 2.0 ist in der ersten Ausführungsform nicht vorgesehen.
- 2.1: Die öffentliche IP-Adresse und die öffentliche Portnummer des im Gateway GW angeordneten STUN-Proxys P wird nach Eintreffen der STUN-Antwort gespeichert. Dieser Schritt 2.1 hat keine Entsprechung in der ersten Ausführungsform.
- 2.2: Wiederholung der Schritte 2.0 und 2.1 in periodischen Zeitabständen um zu erreichen, dass eine (nicht dargestellte) Firewall und/oder die NAT-Einheit NAT einen entsprechenden Datenpfad offenhalten. Würde dieser Datenpfad nicht offengehalten bleiben, würde entweder die Firewall oder die NAT-Einheit NAT einen entsprechenden Port schließen, so dass das paketorientierte Netzwerk LAN nicht mehr von außerhalb erreichbar wäre. Dieser Schritt 2.2 hat keine Entsprechung in der ersten Ausführungsform.
- 2.3: Während der Verfahrensschritt 2.2 weiterhin ausgeführt wird, hört das Gateway GW das erste Netzwerk LAN auf Signalisierungsnachrichten seitens des ersten Kommunikationsendgeräts P1 ab. Liegen derartige Signalisierungsnachrichten von Seiten des ersten Kommunikationsendgeräts P1 vor, werden diese abgefangen und deren Inhalte im Gateway GW gespeichert. Im speziellen werden Informationen über die private IP-Adresse und den jeweiligen TCP- bzw. UDP-Port des ersten Kommunikationsendgeräts P1 gespeichert, welche das erste Kommunikationsendgerät P1 für einen Empfang von Nutzdaten zu verwenden beabsichtigt. Entsprechende Informationen werden auch über das zu rufende Kommunikationsendgerät P2 vorgehalten.
- 2.4: In einem weiteren Schritt werden seitens des Gateways GW nun STUN-Anfragen an den STUN-Server STUN gesendet. Diese Anfragen werden jedoch nicht unter Verwendung der eigenen Adresse des Gateways GW gesendet. Stattdessen sendet das Gateway GW Anfragen unter Verwendung der IP-Adresse und des Quellports, welche jeweils aus den abgefangenen Signalisierungsnachrichten entnommen und gespeichert wurden. Mit anderen Worten führt das Gateway GW auch hier ein IP-Address-Spoofing sowie ein Port-Spoofing durch. In die besagte STUN-Anforderung wird die Option »RESPONSE-ADDRESS« verwendet. Diese weist den STUN-Server STUN an, die Antwort auf die STUN-Anforderung nicht an das erste Kommunikationsendgerät P1 zu senden, also den mit Spoofing vorgegebenen Absender der STUN-Anfrage, sondern an einen im Feld »RESPONSE-ADDRESS« spezifizierten Empfänger. Als im Feld »RESPONSE-ADDRESS« spezifizierter Empfänger wird dabei die in Schritt 2.1 gespeicherte öffentliche IP-Adresse und die entsprechende öffentliche Portnummer des STUN-Proxys P eingetragen.
- 2.5: Aufgrund der in Schritt 2.4 getroffenen Maßnahmen wird die STUN-Antwort an den STUN-Proxy P des Gateways GW anstatt an das erste Kommunikationsendgerät P1 gesendet.
- 2.6: Die öffentliche IP-Adresse und der öffentliche Port des ersten Kommunikationsendgeräts wird seitens des Gateway GW der STUN-Antwort entnommen.
- 2.7: Das Gateway GW ersetzt die private IP-Adresse und die private Portnummer des ersten Kommunikationsendgeräts P1 durch dessen jeweilige öffentliche IP-Adresse und öffentlichen Portnummer, welche jeweils der im Schritt 2.5 erhaltenen STUN-Antwort entnommen wurden.
- 2.8: Eine gemäß den vorangehenden Schritten modifizierte Signalisierungsnachricht wird an das Ziel gesendet, das im Schicht-3-Header der Signalisierungsnachricht identifiziert wurde.
Mit den Schritten 2.0, 2.1 und 2.2 wird letztlich sichergestellt, dass das Gateway GW seitens des zweiten paketorientiertem Netzwerks INT bzw. Internet erreichbar bzw. adressierbar bleibt. In einer alternativen Ausgestaltung der zweiten Ausführungsform wird von einer Durchführung bzw. Implementierung der Schritte 2.0, 2.1 und 2.2 abgesehen und stattdessen seitens des Gateways GW eine öffentliche Netzwerkadresse verwendet. In dieser alternativen Ausgestaltung wird im Schritt 2.4 die öffentliche Adresse des Gateways GW in das Feld »RESPONSE-ADDRESS« eingetragen.

In einer im Folgenden erläuterten dritten Ausführungsform der Erfindung wird anstelle des Protokolls STUN das Protokoll TURN (Traversal Using Relay NAT) verwendet. Das Verfahren ist bis auf eine Ersetzung des Ausdrucks »STUN« durch den Ausdruck »TURN« identisch zu dem der zweiten Ausführungsform zugehörigen Verfahren.

Im Folgenden wird eine vierte Ausführungsform der Erfindung unter Verwendung des Protokolls ICE (Interactive Connectivity Establishment) erläutert. Hierzu wird unter Bezugnahme auf die Figur 2 erneut angenommen, dass das Gateway GW sich im Datenpfad sowohl für Nutzdaten- als auch für Signalisierungsnachrichten befindet. Eine Position »im Datenpfad« bedeutet also analog zur ersten Ausführungsform, dass sowohl Signalisierungs- als auch Nutzdaten-Nachrichten (Media Messages) über das Gateway GW geführt werden. Im Gateway GW ist ein entsprechender ICE-Proxy P implementiert.

Unter Mitwirkung des ICE-Proxys P im Gateway GW werden dabei folgende Schritte durchgeführt, welche entsprechend der Richtung Ihrer Nutzdatennachrichten nummeriert sind. Anfänglich mit 4.1 nummerierte Schritte erfolgen ausgehend vom Local Client in Richtung auf den Remote Client, also ausgehend vom rufenden ersten Kommunikationsendgerät P1 in Richtung auf das gerufene zweite Kommunikationsendgerät P2. Anfänglich mit 4.2 nummerierte Schritte erfolgen ausgehend vom Remote Client in Richtung auf den Local Client, also ausgehend vom gerufenen zweiten Kommunikationsendgerät P2 in Richtung auf das rufende erste Kommunikationsendgerät P1.
- 4.1.1: Signalisierungsnachrichten des zweiten Kommunikationsendgeräts P2 werden seitens des Gateway GW abgefangen. Diese Signalisierungsnachrichten wurden optional auch an ein im zweiten Netzwerk INT angeordnetes - nicht dargestelltes - VoIP-Gateway auf Schicht 3 gesendet. Die Signalisierungsnachricht enthält gegebenenfalls eine Kandidatenliste mit möglichen IP-Adressen und Portnummern des zweiten Kommunikationsendgeräts P2.
- 4.1.2: Die Adresse des Kommunikationsendgeräts P2 wird aus der Signalisierungsnachricht entnommen.
- 4.1.3: Der ICE-Proxy P im Gateway GW sendet eine STUN-Anforderung an die Adresse des zweiten Kommunikationsendgeräts P2, wobei als Adresse die im Schritt 4.1.2 aus der Signalisierungsnachricht entnommenen IP-Adresse und Portnummer des zweiten Kommunikationsendgeräts P2 verwendet werden. Weiterhin werden zur Identifizierung des Absenders statt der eigenen IP-Adresse und eigenen Portnummer des Gateways GW die jeweiligen aus der Signalisierungsnachricht gemäß Schritt 4.1.2 entnommenen Quell-IP-Adresse und Quell-Portnummer verwendet. Mit anderen Worten wird ein IP Address Spoofing und Port Spoofing angewandt.
- 4.1.4: Eine aus dem öffentlichen Netzwerkbereich INT in Richtung des ersten Kommunikationsendgeräts P1 gesendete STUN-Antwort wird seitens des Gateway GW abgefangen.
- 4.1.5: Aus der STUN-Antwort werden die Quell-IP-Adresse und die Quell-Portnummer aus dem Schicht-3-Header entnommen.
- 4.1.6: Die mit der Signalisierungsnachricht aus Schritt 4.1.1 bezogene Kandidatenliste mit möglichen IP-Adressen und Portnummern des zweiten Kommunikationsendgeräts P2 wird durch die einzige in Schritt 4.1.5 bestimmte IP-Adresse ersetzt.
- 4.1.7: Aus den gemäß den vorhergehenden Schritten bestimmten Adressen und Portnummern wird eine veränderte Signalisierungsnachricht erstellt. Diese wird an die IP-Adresse und Portnummer weitergeleitet, welche im Schicht-3- bzw. Schicht-4-Header entnommen wurden.

Während die Schritte in 4.1 sich auf eine Richtung der Nutzdatennachrichten vom ersten Kommunikationsendgerät P1 in Richtung des zweiten Kommunikationsendgeräts P2 bezogen, werden in folgenden Unterschritten von 4.2 Nachrichten betrachtet, welche vom zweiten Kommunikationsendgerät P2 in Richtung des ersten Kommunikationsendgeräts P1 gesendet werden.
- 4.2.1: Ausführen der Schritte 1.1 bis 1.4 gemäß der ersten Ausführungsform der Erfindung.
- 4.2.2: Einfügen von STUN- bzw. TURN-Adressen, welche im obigen Schritt 4.2.1 bezogen wurden, in eine Kandidatenliste. Diese Kandidatenliste wird in eine neu erzeugte Signalisierungsnachricht eingefügt, welche an das Ziel gesendet wird, das in dem Schicht-3-Header der Signalisierungsnachricht identifiziert wurde.
- 4.2.3: Die Gegenseite der Kommunikation, d.h. das zweite Kommunikationsendgerät P2 wird nun alle Kandidaten der Kandidatenliste überprüfen, indem an alle Kandidaten der Kandidatenliste eine STUN-Anforderung gesendet wird. Die Kandidaten sind dabei die möglicherweise gültigen IP-Adressen bzw. entsprechende Portnummern des rufenden Partners, d.h. des ersten Kommunikationsendgeräts P1. Der ICE-Proxy P fängt diese STUN-Anforderungen, welche an den »ICE-unbedarften« (non-ICE-aware) Kommunikationspartner P1 gesendet wurden, ab und beantwortet diese entsprechend. Eine IP-Address-Spoofing ist hier also nicht notwendig oder nicht unbedingt notwendig.

Eine scheinbare - nicht zuletzt anhand einer identischen Netzwerktopologie denkbare - Analogie dieser vierten Ausführungsform zur ersten Ausführungsform stellt sich im Fall der Verwendung von ICE tatsächlich als verschieden im Vergleich zu der auf STUN basierenden ersten Ausführungsform heraus. ICE weist Besonderheiten auf, die es in dieser vierten Ausführungsform zu berücksichtigen gilt.

Eine einfacher zu handhabende Situation entsteht dann, wenn zuerst das zweite Kommunikationsnachricht eine Signalisierungsnachricht, beispielsweise SIP-Nachricht, schickt. Dann kann das erste Kommunikationsendgerät P1 dort enthaltene IP-Adresse und Portnummer für seine STUN-Anfragen nutzen und so herausfinden, unter welcher Adresse sowohl das lokale erste Kommunikationsendgerät P1 als auch das zweite Kommunikationsendgerät P2 zu erreichen ist. Entsprechend werden die Informationen in SIP bzw. SDP vor der Weiterleitung berichtigt.

Eine schwieriger zu handhabende Situation entsteht dann, wenn das erste Kommunikationsendgerät P1 die Gegenseite, d.h. das zweite Kommunikationsendgerät P2 ruft. Seitens des STUN Proxys P besteht dann keine Kenntnis, an wen eine entsprechende STUN-Anfrage geschickt werden soll. Die hierzu vorgeschlagene Lösung besteht darin, die Gegenseite dazu bringen, ihre IP-Adresse und Portnummer mitzuteilen. Dazu kann das STUN-Proxy P, das eine Einladungsnachricht bzw. »SIP INVITE«-Nachricht vom lokalen ersten Kommunikationsendgerät P1 abgefangen hat, diese Einladungsnachricht ohne IP-Adresse und Portnummer weiterleiten. Eine Nachreichung der IP-Adresse und Portnummer kann in einer späteren SIP-Nachricht erfolgen. Das zweite Kommunikationsendgerät P2 sollte auf die Einladungsnachricht mit einer SIP-Nachricht antworten, welche dessen IP-Adresse und Portnummer enthält. Nun ist das STUN-Proxy in der Lage, eine STUN-Abfrage machen. Das STUN-Proxy P kann des weiteren die IP-Adresse und Portnummer des zweiten Kommunikationsendgeräts P2 nachreichen und die vom zweiten Kommunikationsendgerät P2 gesendete SIP-Nachricht entsprechend der aus mit Hilfe des STUN-Protokolls erhaltenen Informationen anpassen und an das erste Kommunikationsendgerät P1 weiterleiten.

Im Folgenden wird eine fünfte Ausführungsform der.Erfindung unter Bezugnahme auf die Figur 1 beschrieben. In dieser Ausführungsform ist ein ICE-Proxy P im Datenpfad der Signalisierungsnachrichten aber nicht im Datenpfad der Nutzdatennachrichten angeordnet.

Für eine Richtung der Nachrichten vom zweiten Kommunikationsendgerät P2 zum ersten Kommunikationsendgerät P1 gibt es keine »Straightforward«-Lösung, da die ICE-fähige Gegenseite, das zweite Kommunikationsendgerät P2, Verbindungsprüfungen ausführt, welche an das »ICE-unbedarfte« erste Kommunikationsendgerät P1 in Form von STUN-Anfragen direkt gesendet werden. Das »ICE-unbedarfte« erste Kommunikationsendgerät P1 ist nicht in der Lage, diese ICE-Verbindungsprüfungen zu bearbeiten. Auch der ICE-Proxy P im Gateway GW kann derartige STUN-Anforderungen nicht abfangen.

Daher ist gemäß der fünften Ausführungsform ein erhöhter Aufwand notwendig, welcher verbunden ist mit einer Handhabung von Nutzdatennachrichten, welche vom ersten Kommunikationsendgerät P1 in Richtung des zweiten Kommunikationsendgeräts P2 gesendet werden.

In beiden Richtungen wird durch den ICE-Proxy P folgendes durchgeführt:
- 5.0.1: Die Schritte 2.0 bis 2.2 werden durchgeführt, mit dem Ziel, die öffentliche IP-Adresse und die öffentliche Portnummer des ICE-Proxys P zu erhalten.

Für im Rahmen der Kommunikationsverbindung ausgehend vom ersten Kommunikationsendgerät P1 in Richtung des zweiten Kommunikationsendgeräts P2 gesendete Nutzdatennachrichten wird unter Beteiligung des ICE-Proxys P folgendes durchgeführt:
- 5.1.1: Abfangen von Signalisierungsnachrichten vom zweiten Kommunikationsendgerät P2 an das erste Kommunikationsendgerät P1.
- 5.1.2: Der Inhalt der Signalisierungsnachrichten wird in einen Signalisierungsnachrichtenspeicher eingeschrieben, so dass dieser in den Schritten 5.2.3 und 5.1.4.2 verwendet werden kann.
- 5.1.3: Im Folgenden wird, analog zum Vorgehen gemäß der Schritte 2.4 bis 2.6, ein Verfahren durchgeführt, bei dem ein STUN-Request mit einer mittels Spoofing vorgegebenen Adresse an das zweite Kommunikationsendgerät P2 gesendet wird, bei dem der STUN-Request im Feld »RESPONSE-ADDRESS« die Adresse des Gateways GW enthält und bei dem der Proxy P eine entsprechende Antwort enthält. Jedoch werden die STUN-Anfragen dieses Mal an die Adressen und Portnummern der Kandidatenliste des Kommunikationsendgeräts P2 gesendet, welche durch Schritt 5.1.1 bestimmt wurden. Weiterhin wird in der Option »RESPONSE-ADDRESS« die Adresse des ICE-Proxys P eingetragen, so dass die Antwort an den ICE-Proxy P gesendet wird.
- 5.1.4: Die Quell-IP-Adresse und die Portnummer werden aus dem Schicht-3- und dem Schicht-4-Header der ersten Antwort auf die STUN-Anfrage bezogen. Diese IP-Adresse und Portnummer des zweiten Kommunikationsendgeräts P2 entsprechen denjenigen aus der Sicht des ICE-Proxys P.
- 5.1.5: In der abgefangenen Nachricht des Schritts 5.1.1 werden alle IP-Adressen und Portnummern der Kandidatenliste entfernt, mit Ausnahme des Eintrags, welche mit der IP-Adresse und Portnummer aus dem im Schritt 5.1.4 gelesenen Werten übereinstimmt.
- 5.1.6: Die abgeänderte Signalisierungsnachricht wird an das Ziel geschickt, das im Schicht-3-Header der Signalisierungsnachricht identifiziert wurde.
- 5.1.7: Optional wird im Signalisierungsnachrichtenspeicher überprüft, ob der (unten erläuterte) Schritt 5.2 bereits ausgeführt wurde und zwar auf derselben Verbindung in umgekehrter Richtung. Für den Fall, dass Schritt 5.2 bereits ausgeführt wurde, wird der (unten erläuterte) Schritt 5.2.4.2 ausgeführt und überprüft, ob die lokale Adresse aus Sicht des zweiten Kommunikationsendgeräts P2 mit der übereinstimmt, welche an das erste Kommunikationsendgerät P1 bereits übersandt wurde. Für den Fall, dass Schritt 5.2 nicht ausgeführt wurde, wird keine Aktion durchgeführt. Ergibt die Überprüfung, dass die lokale Adresse aus Sicht des zweiten Kommunikationsendgeräts P2 mit der an das erste Kommunikationsendgerät P1 übersandten übereinstimmt, wird die Verbindung z.B. mit einer SIP UPDATE oder mit einer SIP re-INVITE-NACHRICHT auf den neuesten Stand gebracht, wobei jetzt eine korrigierte IP-Adresse und Portnummer angegeben wird.

Für im Rahmen der Kommunikationsverbindung ausgehend vom zweiten Kommunikationsendgeräts P2 in Richtung des ersten Kommunikationsendgerät P1 gesendete Nutzdatennachrichten wird unter Beteiligung des ICE-Proxys P folgendes durchgeführt:
- 5.2.2: Signalisierungsnachrichten vom ersten Kommunikationsendgerät in Richtung des zweiten Kommunikationsendgeräts P2 werden durch das Gateway GW abgefangen.

- 5.2.3: Es erfolgt eine Abfrage des Signalisierungsnachrichtenspeichers, ob eine Signalisierungsnachricht in umgekehrter Richtung bereits empfangen wurde.
- 5.2.4.1: Ist die gemäß 5.2.3 erläuterte Abfrage negativ, d.h. eine Signalisierungsnachricht in umgekehrter Richtung wurde nicht empfangen, werden die Schritte 2.4 bis 2.6 mit der lokalen IP-Adresse und Portnummer des ersten Kommunikationsendgeräts P1, laut der Signalisierungsnachricht, ausgeführt. Dies bedeutet, dass eine STUN-Anfrage an den öffentlichen STUN-Server STUN gesendet wird, jedoch mit der Maßgabe der Option »RESPONSE-ADDRESS«, um zu erreichen, dass die Antwort an den ICE-Proxy P gesandt wird. Anschließend wird die öffentliche IP-Adresse und Portnummer für das erste Kommunikationsendgerät P1 der STUN-Antwortnachricht entnommen.
- 5.2.4.1: Ist die Abfrage gemäß 5.2.3 positiv, d.h. ist bereits eine Signalisierungsnachricht in umgekehrter Richtung empfangen worden, werden die Schritte 2.4 bis 2.6. ausgeführt, jedoch wird die STUN-Anfrage diesmal an die aus der Kandidatenliste entnommene Adresse des zweiten Kommunikationsendgeräts P2 gesandt. In diesem Fall kann die IP-Adresse und Portnummer des ersten Kommunikationsendgeräts P1 aus Sicht des zweiten Kommunikationsendgeräts P2 der STUN-Antwort entnommen werden.
- 5.2.5: Die in der Signalisierungsnachricht enthaltene private IP-Adresse wird nun ersetzt, wobei als ersetzende IP-Adresse entweder diejenige verwendet wird, welche in Schritt 5.1.4.1 ermittelt oder diejenige, welche in Schritt 5.1.4.2 ermittelt wurde.
- 5.2.6: Die so überarbeitete Signalisierungsnachricht wird nun an das Ziel weitergeleitet, welches im Schicht-3-Header der Signalisierungsnachricht identifiziert wurde.

Der erfindungsgemäße STUN-Proxy P lässt die Notwendigkeit entfallen, STUN oder ICE-Fähigkeiten in Kommunikationsendgeräte zu integrieren. Die vorliegende Erfindung zeigt auch, wie mit Netzwerktopologien verfahren wird, in dem der STUN-Proxy P im Datenpfad von Signalisierungsnachrichten aber nicht im Datenpfad von Nutzdatennachrichten angeordnet ist.

## Patentansprüche

1. Verfahren zum Aufbau einer Verbindung zwischen paketorientierten Kommunikationsendgeräten,
- bei dem ein erstes Kommunikationsendgerät (P1) in einem ersten Netzwerk (LAN) angeordnet ist, wobei das erste Netzwerk (LAN) über eine netzwerkadressumsetzende Einheit (NAT) an ein zweites Netzwerk (INT) angebunden ist, in dem ein zweites Kommunikationsendgerät (P2) angeordnet ist,
- bei dem ein an das erste Netzwerk (LAN) angeschlossenes Gateway (GW) eine Vermittlung des ersten Kommunikationsendgeräts (P1) steuert,
- bei dem ein dem Gateway (GW) zugeordneter Proxy (P) zum Abfangen von für das erste Kommunikationsendgerät (P1) bestimmte und/oder seitens des ersten Kommunikationsendgeräts (P1) ausgehenden Nachrichten eingerichtet ist,
- bei dem seitens des Proxys (P) ein Netzwerkprotokoll zur Erkennung der netzwerkadressumsetzenden Einheit (NAT) und zur Zustellung von Datenpaketen der Nachrichten an einen Server (STUN), der an das zweite Netzwerk (INT) angeschlossen ist, implementiert ist,
**gekennzeichnet durch**
- bei dem der Proxy (P) eine seitens des Servers (STUN) an das erste Kommunikationsendgerät (P1) gesendete erste Nachricht an Stelle des ersten Kommunikationsendgeräts (P1) **durch** eine zweite Nachricht beantwortet, in welcher
- als Absenderadresse und/oder Absender-Portnummer eine Adresse und/oder Portnummer des ersten Kommunikationsendgeräts (P1) eingetragen wird, und/oder,
- eine gemäß dem Netzwerkprotokoll zur Erkennung der netzwerkadressumsetzenden Einheit (NAT) und zur Zustellung von Datenpaketen der Nachrichten vorgesehene Option eingestellt wird, welche eine Übermittlung der Antwort auf die zweite Nachricht an das erste Kommunikationsendgerät (P1) veranlasst.

2. Verfahren nach Anspruch 1,
**dadurch gekennzeichnet,**
**dass** sich das Gateway (GW) außerhalb des Datenpfads der zwischen dem Server (STUN) und dem ersten Kommunikationsendgerät (P1) ausgetauschten Nutzdaten befindet.

3. Verfahren nach Anspruch 1,
**dadurch gekennzeichnet,**
**dass** sich das Gateway (GW) sowohl im Datenpfad der zwischen dem Server (STUN) und dem ersten Kommunikationsendgerät (P1) ausgetauschten Nutzdaten als auch der zwischen dem Server (STUN) und dem ersten Kommunikationsendgerät (P1) ausgetauschten Signalisierungsdaten befindet.

4. Verfahren nach einem der vorgenannten Ansprüche,
**dadurch gekennzeichnet,**
**dass** als Netzwerkprotokoll zur Erkennung der netzwerkadressumsetzenden Einheit (NAT) und Zustellung von Datenpaketen der Nachrichten STUN und/oder TURN und/oder ICE oder eine Kombination der drei genannten Netzwerkprotokolle verwendet wird.

5. Verfahren nach einem der vorgenannten Ansprüche,
**dadurch gekennzeichnet,**
**dass** zur Wahl der Option zur Übermittlung der Antwort auf die zweite Nachricht an das erste Kommunikationsendgerät (P1) ein im Netzwerkprotokoll vorgesehenes »RESPONSE-ADDRESS«-Feld mit der Adresse des ersten Kommunikationsendgerätes (P1) befüllt wird.

6. Proxy (P) zum Aufbau einer Verbindung zwischen paketorientierten Kommunikationsendgeräten bei dem ein erstes Kommunikationsendgerät (P1) in einem ersten Netzwerk (LAN) angeordnet ist, wobei das erste Netzwerk (LAN) über eine netzwerkadressumsetzende Einheit (NAT) an ein zweites Netzwerk (INT) angebunden ist, in dem ein zweites Kommunikationsendgerät (P2) angeordnet ist, bei dem ein an das erste Netzwerk (LAN) angeschlossenes Gateway (GW) eine Vermittlung des ersten Kommunikationsendgeräts (P1) steuert, wobei der Proxy (P) dem Gateway (GW) zugeordnet ist, umfassend
- Mittel zum Abfangen von für das erste Kommunikationsendgerät (P1) bestimmte und/oder seitens des ersten Kommunikationsendgeräts (P1) ausgehenden Nachrichten eingerichtet ist,
- Mittel zum Betrieb eines Netzwerkprotokolls zur Erkennung der netzwerkadressumsetzenden Einheit (NAT) und zur Zustellung von Datenpaketen der Nachrichten an einen Server (STUN), der an das zweite Netzwerk (INT) angeschlossen ist,
**gekennzeichnet durch**
- Mittel zur Beantwortung einer seitens des Servers (STUN) an das erste Kommunikationsendgerät (P1) gesendeten ersten Nachricht an Stelle des ersten Kommunikationsendgeräts (P1) **durch** eine zweite Nachricht, in welcher
- als Absenderadresse und/oder Absender-Portnummer eine Adresse und/oder Portnummer des ersten Kommunikationsendgeräts (P1) eingetragen ist, und/oder,
- eine gemäß dem Netzwerkprotokoll zur Erkennung der netzwerkadressumsetzenden Einheit (NAT) und zur Zustellung von Datenpaketen der Nachrichten vorgesehene Option eingestellt ist, **durch** welche eine Übermittlung der Antwort auf die zweite Nachricht an das erste Kommunikationsendgerät (P1) veranlasst ist.

## Claims

1. Method for opening a connection between packet-oriented communication terminals,
- in which a first communication terminal (P1) is arranged in a first network (LAN), with the first network (LAN) being connected via a network address-translating unit (NAT) to a second network (INT) in which a second communication terminal (P2) is arranged,
- in which a gateway (GW) connected to the first network (LAN) controls a switching of the first communication terminal (P1),
- in which a proxy (P) associated with the gateway (GW) is configured to intercept messages intended for the first communication terminal (P1) and/or outgoing from the first communication terminal (P1),
- in which a network protocol for detecting the network address-translating unit (NAT) and for delivering data packets of the messages to a server (STUN) which is connected to the second_network (INT), is implemented by the proxy (P), wherein *[sic]*
- in which the proxy (P) instead of the first communication terminal (P1) answers a first message sent by the server (STUN) to the first communication terminal (P1) with a second message in which
- an address and/or port number of the first communication terminal (P1) is entered as the sender address and/or sender port number, and/or,
- an option provided according to the network protocol for detecting the network address-translating unit (NAT) and for delivering data packets of the messages is selected which initiates a transmission of the answer to the second message to the first communication terminal (P1).

2. A method according to claim 1, wherein the gateway (GW) lies outside the data path of the user data exchanged between the server (STUN) and the first communication terminal (P1).

3. The method of claim 1 wherein the gateway (GW) lies in the data path both of the user data exchanged between the server (STUN) and the first communication terminal (P1) and of the signalling data exchanged between the server (STUN) and the first communication terminal (P1).

4. A method according to any one of the preceding claims wherein STUN and/or TURN and/or ICE or a combination of the three named network protocols is used as a network protocol for detecting the network address-translating unit (NAT) and delivering data packets of the messages,

5. A method according to any one of the preceding claims wherein to select the option for transmitting the answer to the second message to the first communication terminal (P1), a "RESPONSE ADDRESS" field provided in the network protocol is filled with the address of the first communication terminal (P1).

6. Proxy (P) for opening a connection between packet-oriented communication terminals in which a first communication terminal (P1) is arranged in a first network (LAN), the first network (LAN) being connected via a network address-translating unit (NAT) to a second network (INT) in which a second communication terminal (P2) is arranged, with a gateway (GW) connected to the first network (LAN) controlling a switching of the first communication terminal (P1), and with the proxy (P) being associated with the gateway (GW), comprising
- means for intercepting messages intended for the first communication terminal (P1) and/or outgoing from the first communication terminal (P1) is configured *[sic],*
means for operating a network protocol for detecting the network address-translating unit (NAT) and for delivering data packets of the messages to a server (STUN) which is connected to the second network (INT), **characterised by**
- means instead of the first communication terminal (P1) for answering a first message sent by the server (STUN) to the first communication terminal (P1)with a second message, in which
- an address and/or port number of the first communication terminal (P1) is entered as the sender address and/or sender port number, and/or,
- an option provided according to the network protocol for detecting the network address-translating unit (NAT) and for delivering data packets of the messages is selected by which a transmission of the answer to the second message to the first communication terminal (P1) is initiated.

## Revendications

1. Procédé servant à établir une connexion entre des terminaux de communication orientés paquets,
- dans le cadre duquel un premier terminal de communication (P1) est disposé dans un premier réseau (LAN), sachant que le premier réseau (LAN) est lié à un deuxième réseau (INT) par l'intermédiaire d'une unité de conversion d'adresse réseau (NAT), dans lequel deuxième réseau est disposé un deuxième terminal de communication (P2).
- dans le cadre duquel une passerelle (GW) raccordée au premier réseau (LAN) commande une transmission du premier terminal de communication (P1),
- dans le cadre duquel un proxy (P) associé à la passerelle (GW) est installé pour intercepter des messages destinés au premier terminal de communication (P1) et/ou en provenance du premier terminal de communication (P1),
- dans le cadre duquel un protocole de réseau servant à identifier l'unité de conversion d'adresse réseau (NAT) et servant à attribuer des paquets de données de messages à un serveur (STUN), raccordé au deuxième réseau (INT), est implémenté du côté du proxy (P), **caractérisé en ce que**
- le proxy (P) répond à un premier message envoyé du côté du serveur (STUN) au premier terminal de communication (P1) par un deuxième message à la place du premier terminal de communication (P1), dans lequel deuxième message
-- une adresse et/ou un numéro de port du premier terminal de communication (P1) sont enregistrés en tant qu'adresse de l'expéditeur et/ou numéro de port de l'expéditeur,
et/ou
-- une option prévue selon le protocole de réseau servant à identifier l'unité de conversion d'adresse réseau (NAT) et servant à attribuer des paquets de données de messages est paramétrée, laquelle ordonne un transfert au premier terminal de communication (P1) de la réponse au deuxième message.

2. Procédé selon la revendication 1,
**caractérisé en ce**
**que** la passerelle (GW) se trouve à l'extérieur du chemin de données des données utiles échangées entre le serveur (STUN) et le premier terminal de communication (P1).

3. Procédé selon la revendication 1,
**caractérisé en ce**
**que** la passerelle (GW) se trouve aussi bien sur le chemin de données des données utiles échangées entre le serveur (STUN) et le premier terminal de communication (P1) que sur le chemin de données des données de signalisation échangées entre le serveur (STUN) et le premier terminal de communication (P1).

4. Procédé selon l'une quelconque des revendications précédentes,
**caractérisé en ce qu'**on utilise comme protocole réseau un protocole STUN et/ou TURN et/ou ICE ou une combinaison des trois protocoles réseau mentionnés pour identifier l'unité de conversion d'adresse réseau (NAT) et pour attribuer des paquets de données de messages.

5. Procédé selon l'une quelconque des revendications précédentes,
**caractérisé en ce**
**que** pour choisir l'option servant à transférer au premier terminal de communication (P1) la réponse au deuxième message, un champ « RESPONSE-ADDRESS » prévu dans le protocole réseau est renseigné avec l'adresse du premier terminal de communication (P1).

6. Proxy (P) servant à établir une connexion entre des terminaux de communication orientés paquets, dans le cadre duquel un premier terminal de communication (P1) est disposé dans un premier réseau (LAN), sachant que le premier réseau (LAN) est lié au deuxième réseau (INT) par l'intermédiaire d'une unité de conversion d'adresse réseau (NAT), dans lequel deuxième réseau est disposé un deuxième terminal de communication (P2), dans le cadre duquel une passerelle (GW) raccordée au premier réseau (LAN) commande une transmission du premier terminal de communication (P1), sachant que le proxy (P) est associé à la passerelle (GW),
comprenant
- des moyens installés pour intercepter des messages destinés au premier terminal de communication (P1) et/ou en provenance du côté du premier terminal de communication (P1),
- des moyens servant à mettre en oeuvre un protocole réseau servant à identifier l'unité de conversion d'adresse réseau (NAT) et servant à attribuer des paquets de données de messages à un serveur (STUN), qui est raccordé au deuxième réseau (INT),
**caractérisé par**
- des moyens servant à répondre à un premier message envoyé du côté du serveur (STUN) au premier terminal de communication (P1) à la place du premier terminal de communication (P1) par un deuxième message, dans lequel
-- sont enregistrés une adresse et/ou un numéro de port du premier terminal de communication (P1) en tant qu'adresse de l'expéditeur et/ou numéro de port de l'expéditeur,
et/ou
-- une option prévue selon le protocole réseau servant à identifier l'unité de conversion d'adresse réseau (NAT) et servant à attribuer des paquets de données des messages est paramétrée, laquelle ordonne une transmission au premier terminal de communication (P1) de la réponse au deuxième message.
